# EUROPÄISCHE PATENTSCHRIFT

(11) **EP 1 802 510 B1**
(45) Veröffentlichungstag und Bekanntmachung des Hinweises auf die Patenterteilung: **28.05.2008**
(21) Anmeldenummer: 05786114.8
(22) Anmeldetag: 16.09.2005
(51) Int. Cl.: B62D 1/184, B62D 1/19

(54) **VERSTELLBARE LENKSÄULE EINES KRAFTFAHRZEUGES**
ADJUSTABLE STEERING COLUMN PERTAINING TO A MOTOR VEHICLE
COLONNE DE DIRECTION REGLABLE D'UN VEHICULE

(30) Priorität: 19.10.2004 DE 102004051060
(43) Veröffentlichungstag der Anmeldung: 04.07.2007
(73) Patentinhaber: ThyssenKrupp Presta Aktiengesellschaft, 9492 Eschen (LI)
(72) Erfinder: SPANO, Ilario, LI-9495 Triesen (LI); HEUBERGER, Thomas, CH-9524 Zuzwil (CH)
(74) Vertreter: Hofmann, Ralf U.
(86) Internationale Anmeldenummer: PCT/EP2005/010060
(87) Internationale Veröffentlichungsnummer: WO 2006/042604

(56) Entgegenhaltungen:
- DE-C1- 19 506 210

## Beschreibung

Die Erfindung betrifft eine verstellbare Lenksäule für ein Kraftfahrzeug mit einem in mindestens eine Stellrichtung verstellbaren Stellteil zur Einstellung der Position der Lenksäule, einem in diese Stellrichtung unverstellbaren Halteteil, einer Feststellvorrichtung, in deren geöffnetem Zustand das Stellteil gegenüber dem Halteteil zur Einstellung der Position der Lenksäule verstellbar ist und in deren geschlossenem Zustand das Stellteil von der Feststellvorrichtung festgestellt ist, und einer Crash-Blockiereinrichtung, von der im Crash-Fall eine zusätzliche Haltekraft gegen eine Verschiebung des Stellteils gegenüber dem Halteteil ausübbar ist und die einen im Crash-Fall in einen Spalt zwischen dem Stellteil und dem Halteteil einschiebbaren und in diesem verkeilbaren Klemmkeil aufweist.

Verstellbare Lenksäulen sind in unterschiedlichen Ausführungsformen bekannt. Üblicherweise kann sowohl die Länge der Lenksäule als auch deren Neigung bzw. Höhe im geöffneten Zustand einer Feststelleinrichtung verändert werden. Zur Fixierung der eingestellten Position im geschlossenen Zustand der Feststelleinrichtung können beispielsweise sich kreuzende Pakete von Lamellen vorgesehen sein, von denen das eine an der die Lenkspindel aufnehmenden Manteleinheit und das andere an einer mit dem Chassis verbundenen Trageinheit festgelegt ist. Die sich kreuzenden Lamellenpakete werden von einem Spannbolzen durchsetzt und durch Betätigung eines Spannhebels gegenseitig verklemmt. Zur Ermöglichung der Verstellung sind in den Lamellenpaketen sowie in der Manteleinheit und in der Trageinheit vom Spannbolzen durchsetzte Langlöcher angeordnet, wobei sich die Langlöcher für die achsiale Verstellung der Lenksäule und für die Höhenverstellung der Lenksäule kreuzen. Eine derartige verstellbare Lenksäule ist beispielsweise aus der EP 0 802 104 B1 bekannt.

Eine weitere verstellbare Lenksäule mit einer nach Art einer Lamellenkupplung ausgebildeten Feststellvorrichtung ist beispielsweise aus der US 6,581,965 B2 bekannt.

Bekannt sind weiters verstellbare Lenksäulen, bei denen die Feststelleinrichtung gezahnte Teile aufweist, die im geschlossenen Zustand der Feststelleinrichtung ineinander eingreifen und somit die achsiale Verstellung und Höhenverstellung der Lenksäule blockieren. Eine solche Lenksäule ist beispielsweise aus der EP 0 836 981 B1 bekannt.

Im Crash-Fall sollen trotz der sehr hohen auftretenden Kräfte Relativbewegungen im Verstellmechanismus der Lenksäule möglichst ausgeschlossen werden, u. a. damit der Airbag als Aufprallschutz für den Fahrer seine volle Wirksamkeit entfalten kann. Die Feststellvorrichtungen, die zur Feststellung der Lenksäule im Normalbetrieb dienen, sind üblicherweise nicht geeignet, diese hohen Kräfte im Falle eines Crashs aufzunehmen, da deren Ausbildung sonst sehr aufwändig wäre und viel Bauraum benötigen würde. Es wurden daher bereits Lenksäulen vorgeschlagen, welche zusätzliche Crash-Blockiereinrichtungen aufweisen, die im Crash-Fall eine zusätzliche Haltekraft gegen eine Verschiebung der Manteleinheit gegenüber der Trageinheit ausüben. Beispielsweise ist es aus der EP 1 044 127 B1 bekannt, im Moment des Aufpralls des Kraftfahrzeuges auf ein Hindernis durch pyrotechnische Mittel eine formschlüssige Verbindung zwischen der Manteleinheit und einer chassisfesten Trageinheit auszubilden. Nachteilig ist die relativ aufwändige Ausbildung einer solchen Lenksäule, wobei auch eine Sensorik zur Erfassung des Aufpralls und zur Auslösung der pyrotechnischen Mittel erforderlich ist.

Die verstellbare Lenksäule der DE 195 06 210 C1 umfasst ein Sperrglied mit einer Schwertkante, welche beim Schließen der Feststellvorrichtung an einen Klemmflansch andrückbar ist. Im Crash-Fall gräbt sich die Schwertkante dieses Sperrgliedes in das Material des Klemmflansches ein, um eine möglichst formschlüssige Verriegelung der Manteleinheit der Lenksäule mit der karosseriefesten Halteeinheit zu bewirken. Nachteilig an dieser Einrichtung ist es, dass ein zuverlässiges Eindrücken der Schwertkante in das Material des Klemmflansches und folglich die formschlüssige Verriegelung im Crash-Fall im Dauerbetrieb nicht zuverlässig gewährleistet werden kann und dass außerdem eine erhöhte Schließkraft zum Schließen der Feststellvorrichtung erforderlich ist. Die DE 195 06 210 C1 offenbart den Oberbegriff von Anspruch 1.

Eine verstellbare Lenksäule der eingangs genannten Art ist aus der DE 196 17 561 C1 bekannt. Es ist hierbei am einen achsial verschiebbaren Teil der Lenkspindel drehbar lagernden Mantelrohr ein Klemmkeil verschiebbar gelagert, der von einer Feder in seine in Richtung zum Lenkrad verschobene passive Stellung beaufschlagt ist. Im Crash-Fall bewirkt die auf den Klemmkeil wirkende Beschleunigungskraft eine Verschiebung des von der Feststellvorrichtung unabhängig wirkenden Klemmkeils gegen die Kraft der Feder, wobei der Klemmkeil in einen Spalt zwischen dem Mantelrohr und einem achsial unverstellbaren Abschnitt der Lenkspindel eingefahren wird und somit die Verschiebung des Mantelrohrs gegenüber der achsial unverstellbaren Lenkspindel und somit auch gegenüber einem chassisfesten Halteteil der Lenksäule blockiert. Ein zuverlässiges Wirksamwerden der Crash-Blockiereinrichtung im Crash-Fall ist bei einer solchen Ausbildung nicht ausreichend sichergestellt. Neben einem Klemmkeil sind in der DE 196 17 561 C1 auch in anderer Form ausgebildete Arretierteile, beispielsweise in Form einer Sperrkugel oder Schwenkbacke, beschrieben. Auch eine sensorgesteuerte Verstellvorrichtung zur Überführung des von der Feststellvorrichtung unabhängigen Arretierteils in seine Wirkstellung ist genannt.

Aufgabe der Erfindung ist es, eine verstellbare Lenksäule mit einer einfach ausgebildeten und zuverlässig wirkenden Crash-Blockiereinrichtung bereitzustellen, von der im Crash-Fall eine zusätzliche Haltekraft gegen eine Verschiebung der Manteleinheit gegenüber der Trageinheit ausübbar ist.

Erfindungsgemäß gelingt dies durch eine verstellbare Lenksäule mit den Merkmalen des Anspruchs 1.

Der Klemmkeil wird somit vom beim Öffnen und Schließen sich bewegenden Teil der Feststellvorrichtung, mit dem der Klemmkeil verbunden ist, zwischen seiner von der Anlagefläche des Stellteils abgehobenen passiven Stellung und einer an das Stellteil angelegten Bereitschaftsstellung verstellt. In dieser Bereitschaftsstellung wird der Klemmkeil im Crash-Fall bei einer beginnenden Verschiebung des Stellteils gegenüber dem Halteteil vom Stellteil in Richtung dieser Verschiebung mitgenommen und gelangt somit zur Verkeilung im Spalt zwischen dem Stellteil und dem Halteteil. Es ist dabei in der Bereitschaftsstellung des Klemmkeils eine ausreichende Mitnahmewirkung, beispielsweise durch eine Mitnahmekraft vom Stellteil auf diesen übertragbar, um ihn in einem Crash-Fall soweit mitzunehmen, dass er im Spalt zwischen dem Stellteil und dem Halteteil verkeilt ist. Vorzugsweise wird dies durch eine formschlüssige Verbindung zwischen dem Klemmkeil und der Anlagefläche des Stellteils im an das Stellteil angelegten Zustand des Klemmkeils erreicht. Anstelle einer formschlüssigen Verbindung oder zusätzlich hierzu könnte auch eine reibschlüssige Verbindung vorgesehen sein.

Beim Öffnen der Feststellvorrichtung wird der Klemmkeil vom sich beim Öffnen und Schließen der Feststellvorrichtung bewegenden Teil der Feststellvorrichtung, mit dem der Klemmkeil verbunden ist, von der Anlagefläche des Stellteils abgehoben, sodass er bei einer Verschiebung des Stellteils gegenüber dem Halteteil vom Stellteil nicht mitgenommen wird.

Das beim Öffnen und Schließen der Feststellvorrichtung sich bewegende Teil der Feststellvorrichtung, mit welchem der Klemmkeil verbunden ist, ist insbesondere ein Feststellelement der Feststellvorrichtung, welches zur Feststellung des Stellteils gegenüber dem Halteteil im geschlossenen Zustand der Feststellvorrichtung dient. Dieses Feststellelement bewegt sich hierbei beim Öffnen und Schließen der Feststellvorrichtung in eine Verschieberichtung und der Klemmkeil wird beim Öffnen und Schließen der Feststellvorrichtung in diese Verschieberichtung mitgenommen. Er steht hierbei in einer entsprechenden Wirkverbindung mit dem Feststellelement, vorzugsweise über einen Tragarm, der am Feststellelement oder einem mit diesem beim Öffnen und Schließen der Feststellvorrichtung mitverschobenen Teil angebracht ist. Prinzipiell denkbar und möglich wäre es auch, dass der Klemmkeil mit einem anderen Teil der Feststellvorrichtung in Verbindung steht, welches beim Öffnen und Schließen der Feststellvorrichtung nicht eine Bewegung in eine Verschieberichtung eines Feststellelements sondern eine Bewegung in eine andere Richtung ausführt, wobei der Klemmkeil vorzugsweise wiederum über einen Tragarm mit diesem Teil der Feststellvorrichtung verbunden ist.

In einer vorteilhaften Ausführungsform der Erfindung ist der Klemmkeil mit einem Feststellelement in Form eines Spannbackens in die Verschieberichtung des Spannbackens beim Öffnen und Schließen der Feststellvorrichtung verbunden, wobei der Spannbacken beim Öffnen und Schließen in achsialer Richtung eines Spannbolzens der Feststellvorrichtung verschiebbar ist. Der Spannbolzen kann hierbei beim Öffnen und Schließen der Feststellvorrichtung ebenfalls in seine achsiale Richtung verschiebbar sein und/oder den Spannbacken in achsialer Richtung des Spannbolzens verschiebbar lagern.

Kraftfahrzeuglenksäulen sind vorzugsweise in mehreren Stellrichtungen einstellbar. In einer Stellrichtung erfolgt hierbei eine achsiale Verstellung (= Längenverstellung) der Lenksäule, in -einer anderen Stellrichtung kann eine Neigungsverstellung erfolgen, welche bei Lenksäulen von Personenkraftwagen üblicherweise gleichzeitig zu einer Höhenverstellung führt. Denkbar und möglich wäre es beispielsweise auch, isolierte Verstellungen für die Höhe und/oder Neigung der Lenksäule vorzusehen.

Vorteilhafterweise kann die erfindungsgemäße Crash-Blockiereinrichtung zur Blockierung der achsialen Verstellbarkeit (= Längenverstellbarkeit) der Lenksäule im Crash-Fall eingesetzt werden. Auch die Höhenverstellung bzw. Neigungsverstellung (in eine oder beide Richtungen) oder eine Kombination mehrerer Verstellrichtungen kann auf diese Weise im Crash-Fall blockiert werden.

In einer vorteilhaften Ausführungsform der Erfindung lagert das Stellteil die Lenkspindel in einem an ihr lenkradseitiges Ende anschließenden Abschnitt drehbar. Ein solches die Lenkspindel zumindest teilweise umgebendes Stellteil wird auch als Mantelrohr bezeichnet.

Das Halteteil kann unmittelbar oder mittelbar mit dem Chassis des Kraftfahrzeugs verbunden sein. Beispielsweise kann das Halteteil von einer chassisfesten Konsole getragen sein, mit der es im Normalbetrieb unverschiebbar verbunden ist und gegenüber der es im Crash-Fall energieaufzehrend verschiebbar ist. Derartige Ausbildungen sind in unterschiedlichen Ausführungsformen bekannt. Beispielsweise können im Crash-Fall umbiegbar oder aufreißbare Haltelaschen zwischen der Konsole und zwischen dem Halteteil angeordnet sein.

Durch die erfindungsgemäße Crash-Blockiereinrichtung, bei welcher der Klemmkeil mit der Feststellvorrichtung gekoppelt ist, werden im Crash-Fall in sehr wirkungsvoller Weise zusätzliche Haltekräfte gegen eine Verstellung der Lenksäule in ihrem Verstellmechanismus bereitgestellt, wobei im geöffneten Zustand der Feststellvorrichtung die Leichtgängigkeit der Verstellung der Lenksäule nicht beeinträchtigt wird.

Bei einer erfindungsgemäßen Lenksäule kann die Feststellvorrichtung unterschiedliche Feststellelemente aufweisen, beispielsweise Verzahnungen, Lamellen oder andere Reibflächen. Die Erfindung ist nicht auf bestimmte Feststellelemente der Feststellvorrichtung eingeschränkt.

Weitere Vorteile und Einzelheiten der Erfindung werden im Folgenden anhand der beiliegenden Zeichnung erläutert. In dieser zeigen:
- Fig. 1: eine Schrägsicht eines Ausführungsbeispiels einer erfindungsgemäßen Lenksäule;
- Fig. 2: eine Seitenansicht der Lenksäule von Fig. 1;
- Fig. 3: eine Seitenansicht der Lenksäule von Fig. 1 im Zustand nach einem Crash;

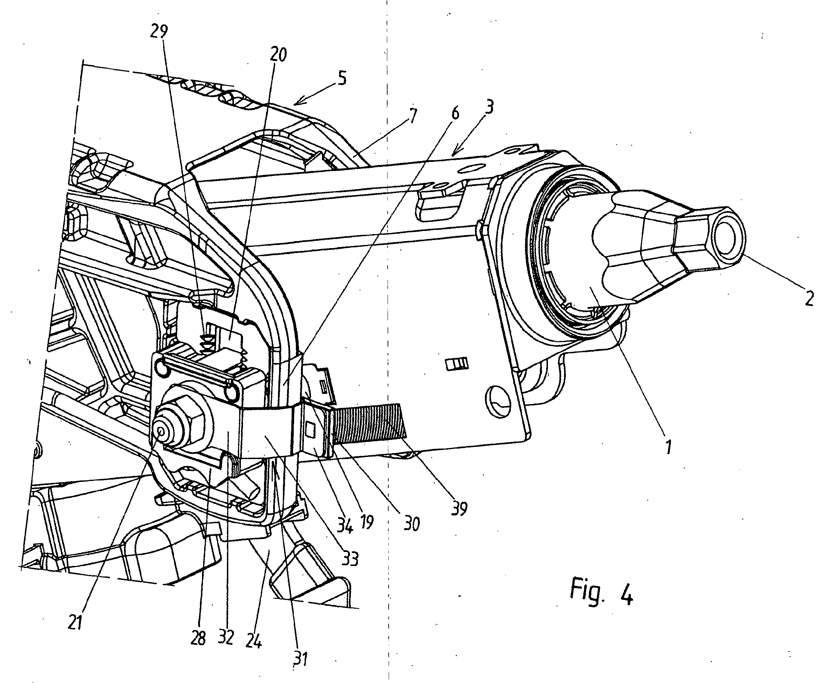

- Fig. 4: einen vergrößerten Ausschnitt aus Fig. 1;
- Fig. 5: einen vergrößerten Ausschnitt der Lenksäule im Bereich der Konsole in einer gegenüber Fig. 1 etwas geänderten Blickrichtung;
- Fig. 6: einen Teil eines Schnitts entlang der Linie A-A von Fig. 2;
- Fig. 7: einen Fig. 6 entsprechenden Schnitt aber im geöffneten Zustand der Feststellvorrichtung;
- Fig. 8: einen Teil eines Schnitts entlang der Linie B-B von Fig. 3;
- Fig. 9: ein vergrößertes Detail C von Fig. 7;
- Fig. 10: ein vergrößertes Detail D von Fig. 6;
- Fig. 11: ein vergrößertes Detail E von Fig. 8 (wobei die Konsole der Übersichtlichkeit halber entfernt wurde);
- Fig. 12: einen Schnitt entsprechenden Fig. 11 in einem etwas modifizierten Zustand nach dem Crash;
- Fig. 13: eine Schrägsicht des Tragarms mit dem daran befestigten Klemmkeil;
- Fig. 14: ein vergrößertes Detail von Fig. 10;
- Fig. 15: eine modifizierte Ausführungsform der Anlagefläche für den Klemmkeil ( in einer Schrägsicht analog Fig. 4);
- Fig. 16: eine weitere, etwas modifizierte Ausführungsvariante der Erfindung (in einem Schnitt entsprechend Fig. 10);
- Fig. 17: den Tragarm mit angebautem Lager gemäß dieser Ausführungsform in Schrägsicht.

Ein Ausführungsbeispiel einer erfindungsgemäßen Lenksäule, welche in achsialer Richtung sowie in der Höhe bzw. Neigung verstellbar ist, ist in den Fig. dargestellt. Die Lenkspindel 1 ist in einem dem lenkradseitigen Ende 2 der Lenksäule benachbarten Abschnitt drehbar in einem Stellteil 3 gelagert, welches die Lenkspindel 1 in diesem Abschnitt umgibt. Das Stellteil 3 ist im geöffneten Zustand einer Feststellvorrichtung 4 gegenüber einem das Stellteil 3 tragenden Halteteil 5 in achsialer Richtung der Lenksäule und in der Höhe bzw. in der Neigung einstellbar, wodurch die Position eines am lenkradseitigen Ende 2 der Lenkspindel 1 angebrachten Lenkrades (nicht dargestellt) entsprechend einstellbar ist.

Das Stellteil 3 einer verstellbaren Lenksäule des Typs, wie er in den Fig. dargestellt ist, wird auch als Mantelrohr oder Führungskasten bezeichnet.

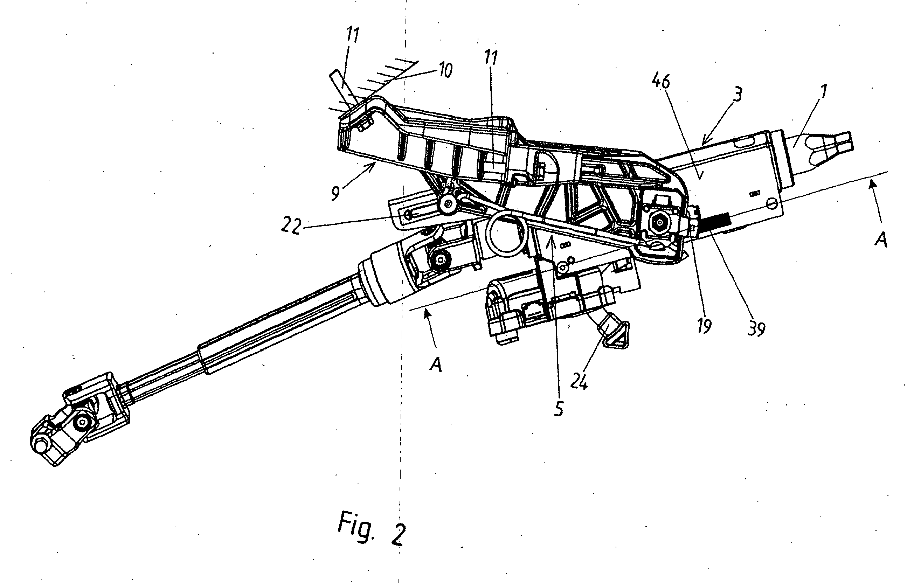

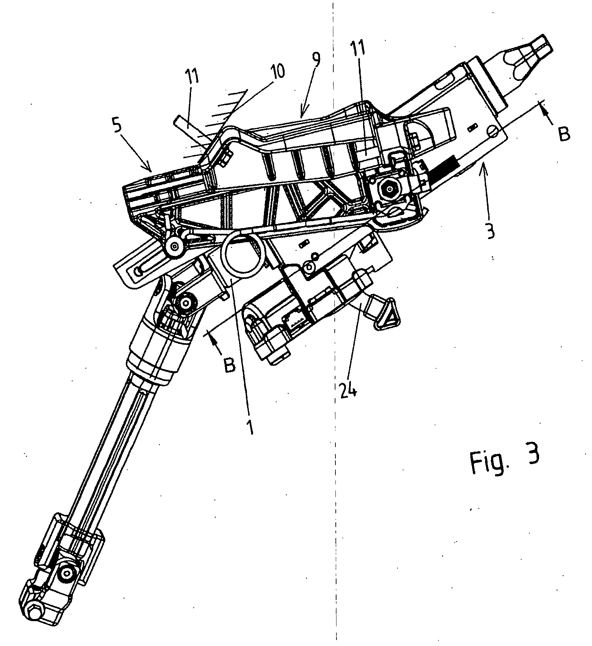

Das Halteteil 5 ist im Querschnitt gesehen U-förmig ausgebildet und besitzt beidseitig des Stellteils 3 sich erstreckende Seitenwangen 6, 7, die durch einen Verbindungsschenkel 8 verbunden sind. Das Halteteil 5 ist über eine Konsole 9 mit dem Chassis 10 des Kraftfahrzeugs verbunden, welches nur in den Fig. 2 und 3 an einer Stelle schematisch ist. Die chassisfeste Konsole 9 ist mittels Schrauben 11 am Chassis befestigt.

Im Normalbetrieb ist das Halteteil 5 ebenfalls chassisfest. Im Crash-Fall ist eine Verschiebung des Halteteils 5 gegenüber der Konsole 9 möglich, wobei Energie aufgezehrt wird. Hierzu greifen beidseitig des Halteteils 5 Klemmschuhe 12 der Konsole 9 in Klemmführungen 13 des Halteteils 5 ein. Die Klemmschuhe 12 sind im gezeigten Ausführungsbeispiel in Form von vorspringenden Klemmnasen ausgebildet, die in die nutförmig ausgebildeten Klemmführungen 13 klemmend eingreifen. Dabei ist, beispielsweise durch eine entsprechende Vorspannung, die Klemmkraft und damit die Losbrechkraft voreingestellt. Im Crash-Fall kann die von den Klemmschuhen 12 ausgeübte Klemmkraft überwunden werden, wodurch sich das Halteteil 5 schlittenartig gegenüber der Konsole 9 in Richtung zur Fahrzeugfront verschieben kann, wobei durch Reibung zwischen den Klemmschuhen 12 und den Klemmführungen 13 und bedarfsweise auch Verformung- und Zerspanung der Klemmführung 13 und/oder der Klemmschuhe 12 Energie aufgezehrt wird. Auch können die Klemmführungen 13 mit einer Kontur versehen sein, die die Klemmkraft während der Verschiebung des Halteteils 5 gegenüber der Konsole 9 progressiv ansteigen lässt.

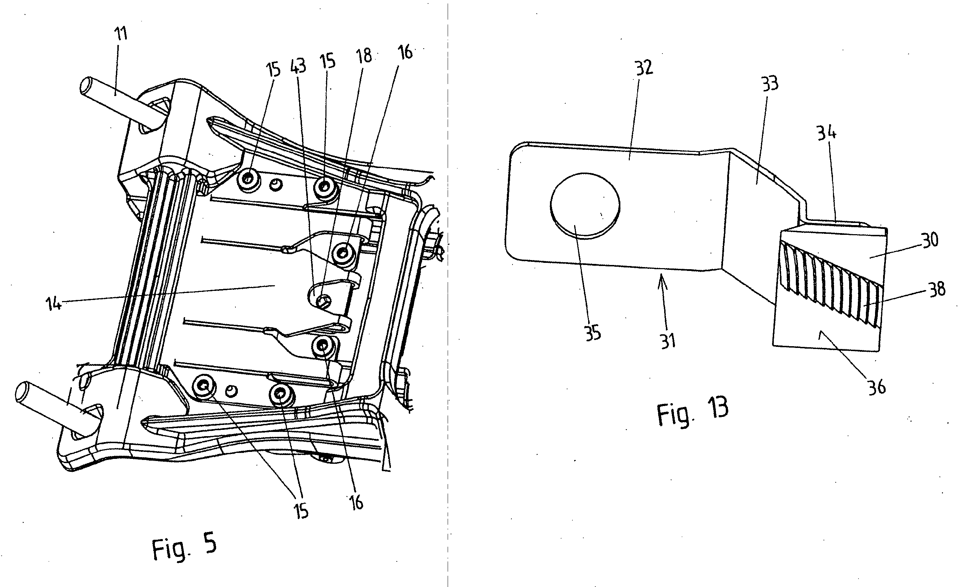

Zur Energieverzehrung bei der Verschiebung des Halteteils 5 gegenüber der Konsole 9 im Crash-Fall ist weiters mindestens eine Biegelasche 14 vorhanden, die U-förmig ausgebildet ist und mit ihrem ersten U-Schenkel über Befestigungsbolzen 15 an der Konsole 9 und an ihrem zweiten U-Schenkel über Befestigungsbolzen 16 am Halteteil 5 befestigt ist. Bei der Verschiebung des Halteteils 5 gegenüber der Konsole 9 wird somit an der Biegelasche 14 Biegearbeit geleistet: Die Biegelasche 14 ist weiters mit Einkerbungen 17 versehen, entlang derer sie bei der Verschiebung des Halteteils 5 gegenüber der Konsole 9 aufreißen kann, wodurch ein weiterer Energieverzehr stattfindet. Es kann zudem ein Verriegelungsbolzen 18 (Fig. 5) vorgesehen sein, der aus dem Halteteil 5 ausgefahren werden kann und dann in eine Ausnehmung 43 im an der Konsole 9 befestigten Schenkel der Biegelasche 14 ragt. Zur Verschiebung des Halteteils 5 gegenüber der Konsole 9 muss in diesem Fall die Biegelasche 14 vom ausgefahrenen Berriegelungsbolzen 18 aufgerissen werden. Die Verschiebung des Halteteils 5 gegenüber der Konsole 9 erfordert daher bei ausgefahrenem Verriegelungsbolzen 18 eine höhere Kraft als bei zurückgezogenem Verrieglungsbolzen. Die Einstellung des Kraftniveaus kann insbesondere in Abhängigkeit davon erfolgen, ob der Fahrer angegurtet ist. Wenn dies nicht der Fall ist, so wird das höhere Kraftniveau eingestellt. Die Verstellung des Verriegelungsbolzens 18 kann beispielsweise im Crash-Fall durch pyrotechnische Mittel erfolgen.

Denkbar und möglich wäre es auch, dass die Biegelasche 14 entfällt und die Energieverzehrung nur über die in den Klemmführungen 13 geführten Klemmschuhen 12 erfolgt. Auch könnte die Energieverzehrung im Wesentlichen nur über eine oder mehrere Biegelaschen erfolgen.

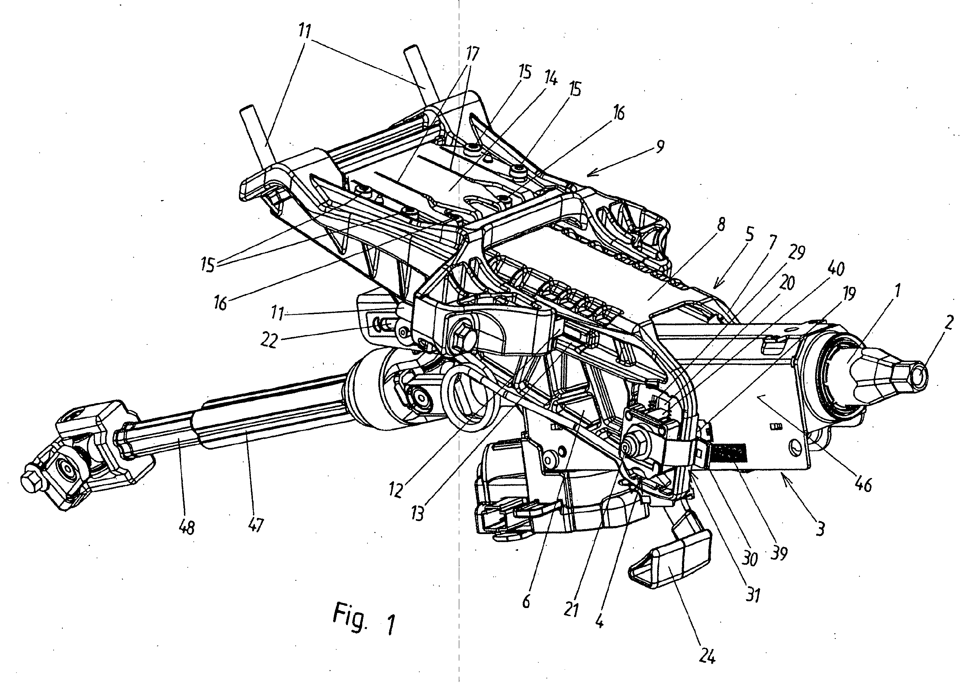

Im Stellteil 3 und im Halteteil 5 sind sich kreuzende Langlöcher angeordnet, die vom Spannbolzen 21 der Feststellvorrichtung 4 durchsetzt werden, sodass die Verstellung des Stellteils 3 gegenüber dem Halteteil 5 in den beiden Stellrichtungen (Längsverstellung und Höhen- bzw. Neigungsverstellung) ermöglicht wird. Im Stellteil 3 ist ein dieses durchsetzendes in achsialer Richtung der Lenksäule bzw. Lenkspindel verlaufendes Langloch 19 vorhanden, von dem in Fig. 1 nur ein randseitiger Abschnitt sichtbar ist. In den Seitenwangen 6, 7 des Halteteils 5 ist jeweils ein in Richtung der Höhenverstellung verlaufendes Langloch 20 vorhanden. Weiters ist am der Fahrzeugfront zugewandten Ende des Stellteils 3 ein in achsialer Richtung der Lenksäule bzw. Lenkspindel verlaufendes Langloch 22 vorhanden, welches von einem am Halteteil 5 angebrachten Bolzen durchsetzt wird, der die Schwenkachse für die Höhen- bzw. Neigungsverstellung der Lenksäule bildet.

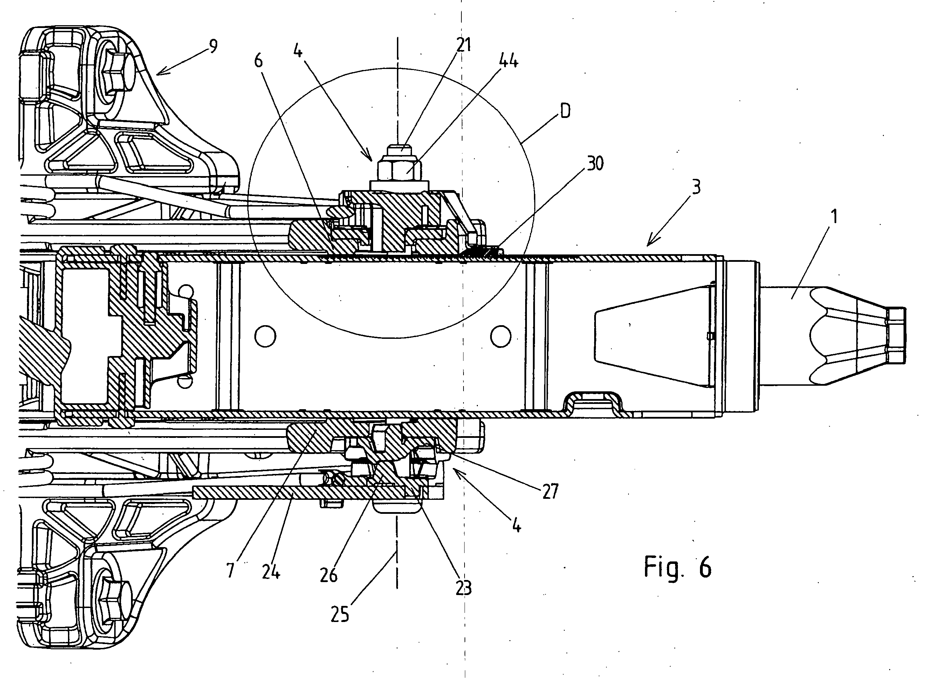

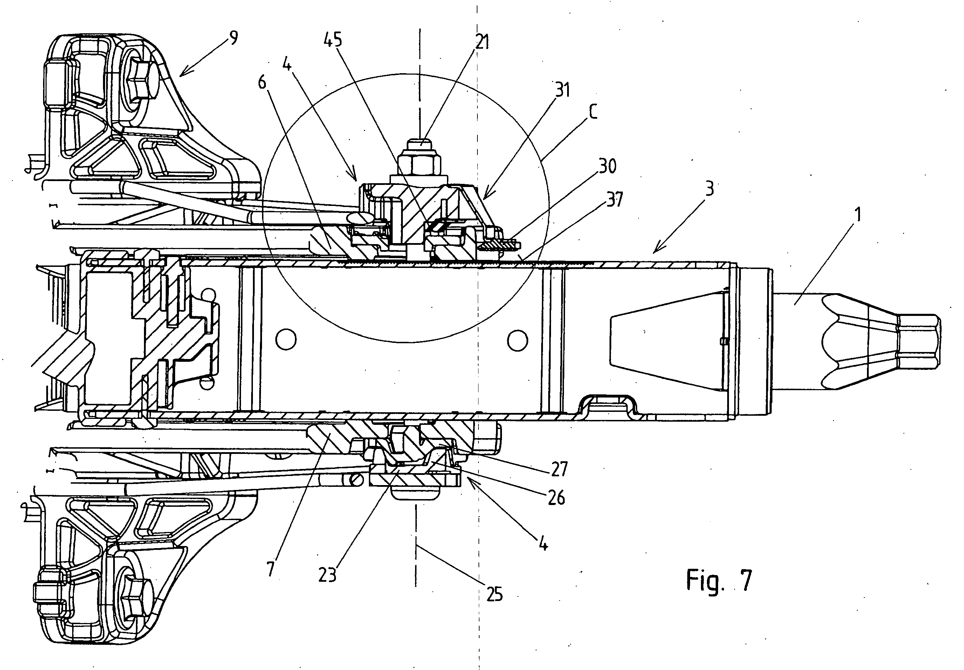

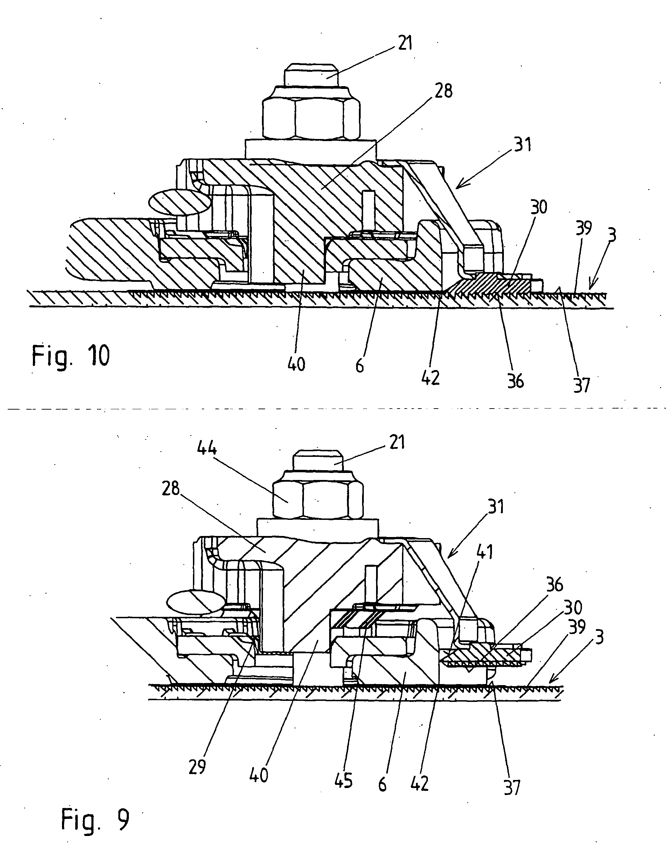

Die Feststellvorrichtung 4 umfasst den bereits erwähnten Spannbolzen 21, der im gezeigten Ausführungsbeispiel beim Öffnen und Schließen der Feststellvorrichtung in seiner achsialen Richtung verstellt wird. Hierzu ist in herkömmlicher Weise eine Spannplatte 23 vorhanden (vgl. z. B. Fig. 6), die von einem Spannhebel 24 um die Längsachse 25 des Spannbolzens 21 verschwenkbar ist. Die Spannplatte 23 ist auf dem Spannbolzen 21 angeordnet oder einstückig mit diesem ausgebildet. Die Spannplatte 23 weist beispielsweise einen Spannnocken 26 auf, der mit einer Schrägfläche einer Gegendruckplatte 27 zusammenwirkt. Bei der Verschwenkung des Spannhebels 24 von seiner Stellung im geöffneten Zustand der Feststellvorrichtung in Richtung seiner Schließstellung wird Spannplatte 23 von der Gegendruckplatte 27 weggedrückt, wodurch der Spannbolzen 21 in seiner achsialen Richtung verstellt wird. Hierbei wird ein auf der dem Spannhebel 24 gegenüberliegenden Seite des Stellteils 3 auf dem Spannbolzen 21 angeordnetes und von der auf den Spannbolzen 21 endseitig aufgeschraubten Mutter 44 abgestütztes Feststellelement 28 in Form eines Spannbackens gegen die Kraft einer in den Fig. nicht sichtbaren Feder in Richtung zur Seitenwange 7 des Halteteils 5 gezogen. Hierdurch werden Verzahnungen 45 des Feststellelements 28 (vgl. Fig. 7 und 9) mit Verzahnungen 29 der Seitenwange 6 in Eingriff gebracht, wodurch eine formschlüssige Verriegelung der Höhenverstellung erreicht wird. Weiters werden Reibflächen der Seitenwangen 6, 7 an die Seitenflächen 46 des Stellteils 3 angedrückt, wodurch eine reibschlüssige Verriegelung der Längsverstellung der Lenksäule erreicht wird.

An der Gegendruckplatte 27 könnten ebenfalls Verzahnungen angeordnet sein, die im geschlossenen Zustand der Feststellvorrichtung in Verzahnungen an der Seitenwange 7 eingreifen und im geöffneten Zustand der Feststellvorrichtung von diesen durch die Kraft einer Feder abgehoben sind.

Feststellvorrichtungen, bei welchen der Spannbolzen beim Öffnen und Schließen in achsialer Richtung verstellt wird, sind in unterschiedlichen Ausführungsformen bekannt. Die Erfindung ist nicht auf die gezeigte und beschriebene Ausbildung der Feststellvorrichtung eingeschränkt. Beispielsweise könnte auch die Feststellung der Längsverstellung der Lenksäule formschlüssig durch ineinander eingreifende Verzahnungen erfolgen.

Die Ausbildung der Feststellvorrichtung könnte hierbei beispielsweise der eingangs genannten EP 0 836 981 B1 entsprechen. Auch könnten zur Feststellung der Höhen- bzw. Neigungsverstellung und/oder der achsialen Verstellung der Lenksäule als Feststellelemente nach Art einer Lamellenkupplung miteinander verklemmbare Lamellen vorgesehen sein. Die Ausbildung könnte hierbei beispielsweise entsprechend der eingangs genannten EP 0 802 104 B1 sein.

Auch der Mechanismus zur manuellen oder motorischen achsialen Verstellung des Spannbolzens beim Öffnen und Schließen kann in unterschiedlicher Weise ausgebildet sein. Beispielsweise könnten an der Spannplatte anstelle von Spannnocken Spannrollen angeordnet sein.

Bei den bisher beschriebenen Ausführungsbeispielen wird der Spannbolzen 21 beim Öffnen und Schließen der Feststellvorrichtung achsial verschoben und nimmt bei seiner achsialen Verschiebung das Feststellelement 28 mit, wobei das Feststellelement 28 mit einem weiteren Feststellelement in Eingriff gelangt, welches hier von den Verzahnungen 29 der Seitenwange 6 gebildet wird. Die Erfindung lässt sich auch bei Feststellvorrichtungen einsetzen, bei denen der Spannbolzen nicht achsial verschieblich angeordnet ist und Feststellelemente unabhängig vom Spannbolzen verschiebbar angeordnet sind. Insbesondere kann die Feststellvorrichtung auch elektrisch oder hydraulisch ansteuerbare Feststellelemente aufweisen, deren Verschiebung nicht unbedingt in Richtung der Achse eines Spannbolzens erfolgen muss. Auch kann der Spannbolzen nur als Verschiebeachse für entsprechende Feststellelemente, beispielsweise einen Spannbacken dienen. Dabei kann der Spannbolzen auch mehrteilig ausgebildet sein und beidseitig auf der von der Lenkspindel 1 abgewandten Seite des Stellteils 3 angeordnet sein.

Um im Crash-Fall eine zusätzliche Haltekraft gegen eine Längsverstellung der Lenksäule aufzubringen, ist eine Crash-Blockiereinrichtung vorhanden, die einen Klemmkeil 30 umfasst. Dieser ist an einem aus einem elastisch biegbaren Material, vorzugsweise Federstahl, ausgebildeten Tragarm 31 angebracht. Der Tragarm besitzt einen ersten Befestigungsabschnitt 32, einen Verbindungsabschnitt 33 und einen zweiten Befestigungsabschnitt 34, an dem der Klemmkeil 30 befestigt ist, vorzugsweise verstemmt, vernietet oder angeschweißt ist (vgl. insbesondere Fig. 13). Der erste Befestigungsabschnitt 32 weist eine Bohrung 35 auf, mit welcher der Tragarm 31 auf den Spannbolzen 21 aufgesteckt ist, wobei er an der von der Lenkspindel 1 abgewandten Seite des Feststellelements 28 angeordnet ist und beispielsweise an diesem angeschweißt oder durch Führungsvorsprünge um die Längsachse 25 des Spannbolzens 21 unverdrehbar mit diesem verbunden ist. Der Tragarm 31 wird somit bei einer achsialen Verstellung des Feststellelements 28 beim Öffnen und Schließen der Feststellvorrichtung ebenfalls in Richtung der Längsachse 25 des Spannbolzens 21 verschoben.

Zwischen dem ersten Befestigungsabschnitt 32 des Tragarms 31 und der Mutter 44 ist eine Unterlegscheibe 49 angeordnet, die auch in Form eines Wälzlagers, insbesondere Nadellagers ausgebildet sein kann (und somit erste und zweite Lagerschalen mit dazwischen in einem Käfig angeordneten Wälzkörpern umfasst).

Auch andere Befestigungen des Tragarms 31 an beim. Öffnen und Schließen der Feststellvorrichtung sich bewegenden Teilen der Feststellvorrichtung sind für den Tragarm 31 denkbar und möglich. So könnte beispielsweise der Tragarm 31 zwischen zwei endseitig auf den Spannbolzen 21 aufgeschraubten Muttern eingesetzt sein oder stirnseitig auf einen Kopf des Spannbolzens aufgeschweißt sein.

Im geschlossenen Zustand der Feststellvorrichtung ist der Klemmkeil 30 mit einer Kontaktfläche 36 an einer Anlagefläche 37 des Stellteils 3 angelegt, wie dies insbesondere aus den Fig. 6 und 10 ersichtlich ist. Im gezeigten Ausführungsbeispiel sind an der Kontaktfläche 36 des Klemmkeils 30 und an der Anlagefläche 37 des Stellteils 3 Verzahnungen 38, 39 angeordnet, die im an die Anlagefläche 37 angelegten Zustand des Klemmkeils 30 miteinander in Eingriff sind.

Da im gezeigten Ausführungsbeispiel der Tragarm 31 unverschwenkbar mit dem Spannbacken 28 verbunden ist und dieser aufgrund einer in das Langloch 20 in der Seitenwange 6 eingreifenden Führungsnase 40 unverschwenkbar gegenüber der Seitenwange 6 ist und das Stellteil 3 bei einer Höhen- bzw. Neigungsverstellung gegenüber dem Halteteil 5 verschwenkt wird, sind die Kämme der Verzahnungen 38, 39 kreisbogenförmig um die Schwenkachse des Stellteils 3, um die das Stellteil 3 bei seiner Höhenverstellung verschwenkt wird, gekrümmt. Die Breite der Verzahnung 39 ist hierbei so groß, dass die Verzahnung 38 bei allen Schwenktellungen des Stellteils 3 mit dieser in Eingriff ist.

Auch denkbar und möglich wäre es, den Tragarm 31 unverschwenkbar gegenüber dem Stellteil 3 zu führen, sodass er bei einer Höhen- bzw. Neigungsverstellung der Lenksäule gegenüber dem Spannbolzen 21 und dem Spannbacken 28 verschwenkt wird. Der Tragarm 31 wird aber bei einer achsialen Verschiebung des Spannbolzens 21 und des Klemmbackens 28 auch bei dieser Ausbildung nach wie vor in die achsiale Richtung mitgenommen.

Weiters ist es allerdings auch denkbar und möglich, den Tragarm 31 so zu führen, dass er während der Verstellung eine Bewegung sowohl gegenüber dem Halteteil 5 als auch dem Stellteil 3 ausführt, deren Bereich insoweit durch entsprechende Maßnahmen, wie Anschlagführungen, eingeschränkt wird, dass ein sicherer Eingriff der Verzahnung 38 des Klemmkeils 30 und der Verzahnung 39 der Anlagefläche 37 beim Schließen der Feststellvorrichtung gewährleistet bleibt. In sehr einfacher Weise kann der Klemmkeil 30 durch eine Fläche der Seitenwange 6 des Halteteils 5 geführt sein. Hier kann die lenkradseitige Stirnfläche der Seitenwangen als Führungsfläche dienen (Fig. 9).

Im geöffneten Zustand der Feststellvorrichtung ist die Kontaktfläche 36 des Klemmkeils 30 von der Anlagefläche 37 des Stellteils 3 abgehoben, wie dies insbesondere aus den Fig. 7 und 9 ersichtlich ist. Wird die Feststellvorrichtung geschlossen, so wird der Spannbolzen 21 achsial verstellt, wobei der Spannbacken 28 in Richtung zur Seitenwange 6 gezogen wird und mit seinen Verzahnungen 45 mit den Verzahnungen 29 der Seitenwange 6 in Eingriff gebracht wird. Bei dieser Verschiebung des Spannbackens 28 wird der Tragarm 31 und mit ihm der Klemmkeil 30 entsprechend verschoben; sodass die Verzahnung 38 des Klemmkeils 30 mit der Verzahnung 39 an der Anlagefläche 37 in Eingriff gebracht wird, wie dies aus Fig. 10 ersichtlich ist.

Reicht nunmehr im Crash-Fall die Haltekraft der Feststellvorrichtung nicht aus, um eine Längsverstellung der Lenksäule zu verhindern, wobei durch den Aufprall des Fahrers auf das Lenkrad oder durch die Auslösung des Airbags eine Verschiebung des Stellteils 3 in Richtung zur Fahrzeugfront einsetzt, so wird der Klemmkeil 30 bei dieser beginnenden Verschiebung durch den Eingriff der Verzahnungen 38, 39 mit dem Stellteil 3 mitgenommen und mit seiner zwischen der von der Kontaktfläche 36 gebildeten ersten Keilfläche und der schräg auf diese zulaufenden zweiten Keilfläche 41 ausgebildeten Keilspitze in einen zum lenkradseitigen Ende 2 hin offenen Spalt 42 zwischen dem Stellteil 3 und der Seitenwange 6 des Halteteils 5 eingeschoben und nach einer kurzen, durch die Konstruktion festlegbaren, Verschiebestrecke von vorzugsweise weniger als 5mm in diesem verkeilt, sodass eine weitere Verschiebung des Stellteils 3 gegenüber dem Halteteil 5 blockiert wird. Je nach Winkel zwischen der ersten Keilfläche und der zweiten Keilfläche 41 kann es sich hierbei um eine eher formschlüssige (größerer Winkel) oder eher reibschlüssige (kleinerer Winkel) Kraftübertragung handeln.

In einer alternativen Ausführungsform ist vorgesehen, durch die Verkeilung des Klemmkeils 30 eine gewisse Bewegung des Stellteils 3 gegenüber dem Halteteil 5 unter Aufzehrung einer durch die Konstruktion vorbestimmten Energiemenge zuzulassen. Dabei erfolgen entsprechende Verformungen im Stellteil 3 und/oder im Halteteil 5. Dadurch kann eine weitere Stufe für mehrstufig wirkende Crash-Systeme ausgebildet sein, d. h. die Energieaufzehrung erfolgt in mehreren Stufen bzw. an mehreren verschiedenen Bauteilen.

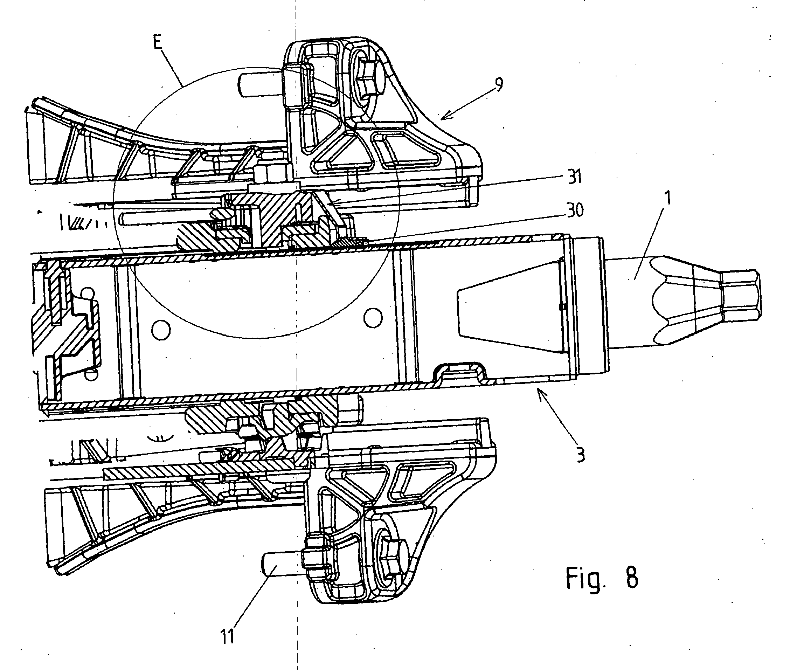

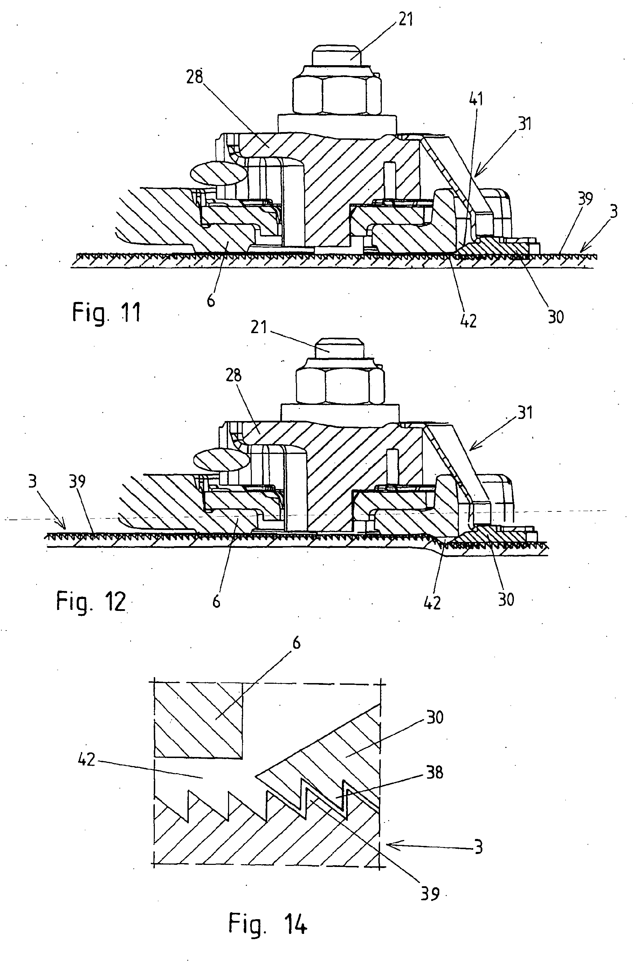

Die Lenksäule nach dem Crash mit dem im Spalt 42 verkeilten Klemmkeil 30 ist in den Fig. 3, 8 und 11 dargestellt. Es ist in den Fig. 3 und 8 auch die Verschiebung des Halteteils 5 gegenüber der Konsole 9 ersichtlich, wobei zwei ineinander teleskopierbare Abschnitte 47, 48 (vgl. Fig. 1) der Lenkspindel 1 zusammengeschoben sind. Fig. 12 zeigt eine etwas modifizierte Darstellung der Situation nach dem Crash. Das Stellteil 3 ist hier in Richtung einer Vergrößerung des Spalts 42 verformt, und zwar aufgrund der Stärke des Aufpralls und/oder aufgrund der verformbaren Ausbildung des Stellteils 3 im Bereich seiner Anlagefläche 37. Die Verformung ist in Fig. 12 übertrieben dargestellt.

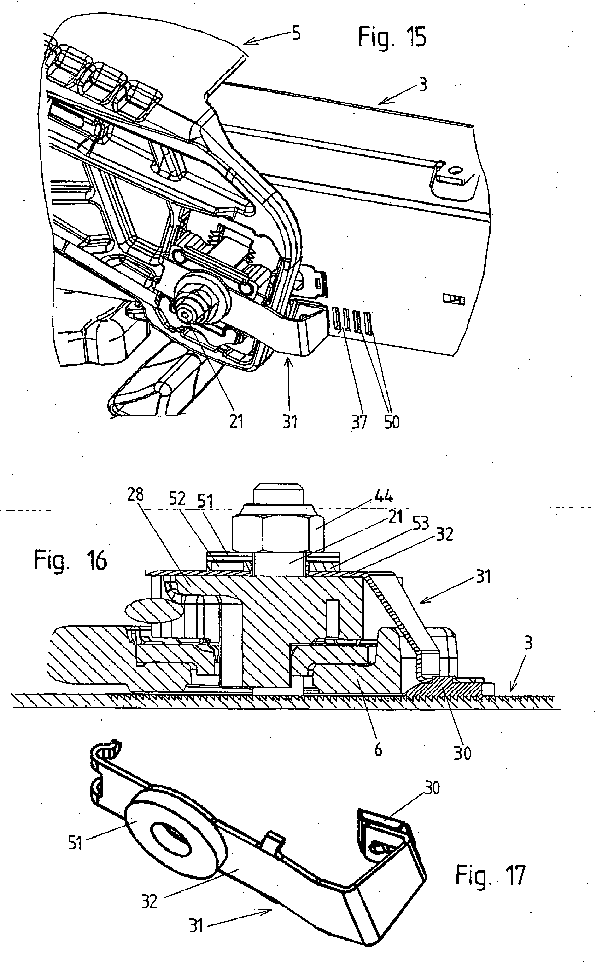

Anstelle von Verzahnungen könnten auch andere formschlüssige Verbindungen zwischen der Kontaktfläche 36 des Klemmkeils 30 und der Anlagefläche 37 des Stellteils 3 vorgesehen sein. Die Kontaktfläche 36 und die Anlagefläche 37 können hierbei unterschiedliche Profilierungen aufweisen, die einen ausreichenden Formschluss zur Mitnahme des Klemmkeils 30 im Crash-Fall gewährleisten. Insbesondere können auch Profilierungen Verwendung finden, die sich als walztechnisch oder umformtechnisch gut in die Seitenfläche 46 des Stellteils 3 einbringen lassen. In einer vorteilhaften Ausführungsform kann es sich hierbei um ausgestanzte Löcher handeln. In Fig. 15 ist eine solche Ausführungsform dargestellt, bei der die Anlagefläche 37 des Stellteils 3 mit schlitzförmigen Ausstanzungen 50 versehen ist, mit denen die Kontaktfläche 36 des Klemmkeils 30, die vorzugsweise wiederum Verzahnungen aufweist, zusammenwirkt.

Anstelle der formschlüssigen Verbindung zwischen dem Klemmkeil 30 und der Anlagefläche 37 des Stellteils 3 oder zusätzlich hierzu wäre es auch denkbar und möglich, eine reibschlüssige Verbindung zwischen der Kontaktfläche 36 des Klemmkeils 30 und der Anlagefläche 37 des Stellteils 3 im geschlossenen Zustand der Feststellvorrichtung auszubilden, indem der Klemmkeil 30 im geschlossenen Zustand der Feststellvorrichtung an die Anlagefläche 37 des Stellteils 3 angedrückt wird. Es wären hierzu an der Kontaktfläche 36 und an der Anlagefläche 37 Materialien mit einer ausreichenden gegenseitigen Reibung sowie eine ausreichende Andruckkraft vorzusehen, sodass der Klemmkeil 30 bei der beginnenden Verschiebung des Stellteils 3 im Crash-Fall von diesem mitgenommen wird.

Bei der Mitnahme des Klemmkeils 30 im Crash-Fall vom Stellteil 3 kommt es bei der bevorzugten elastischen Ausbildung des Tragarms 31 zu einer elastischen Verbiegung des Tragarms (auch eine plastische Verformung des Tragarms ist statt dessen denkbar und möglich). Durch die Elastizität des Tragarms können auch eine ausreichende Anpresskraft der Kontaktfläche 36 an die Anlagefläche 37 im geschlossenen Zustand der Feststellvorrichtung 4 aufgebracht werden und Toleranzen aufgenommen werden. Durch die Elastizität des Tragarms 31 kann weiters die Feststellvorrichtung 4 auch dann mit nur geringfügig erhöhtem Kraftaufwand geschlossen werden, wenn eine sogenannte Zahn-auf-Zahn-Stellung zwischen den Verzahnungen 38, 39 vorliegt, d. h. die Spitzen ihrer Zähne aneinander anliegen. Zum vollständigen Eingriff zwischen den Verzahnungen 38, 39 kommt es dann im Crash-Fall bei der beginnenden Verschiebung des Stellteils 3.

Um ein Eingreifen der Verzahnungen 38 und 39 stets zu gewährleisten könnte, an der Seitenwange 6 auch eine Anlagefläche vorgesehen sein, welche den Tragarm 31 kurz vor dem vollständigen Absenken des Klemmkeils 30, z. B. bei einem Abstand der Kontaktfläche 36 des Klemmkeils 30 zur Anlagefläche 37 des Halteteils 3 von dem 0,5-fachen bis 0,9-fachen der Verzahnungstiefe der Verzahnungen 38 und 39 zueinander, in Richtung des lenkradseitigen Endes 2 der Lenkspindel drückt. Die Länge dieser Bewegung kann beispielsweise auf das 1,5-fache der Zahnbreiten der Verzahnungen 38 und 39 begrenzt bleiben. Auch durch die Federwirkung des Tragarms kann eine solche Verschiebung beim Schließen der Feststellvorrichtung erfolgen, durch welche eine Zahn-auf-Zahn-Stellung verhindert wird.

Um einen formschlüssigen Eingriff zu gewährleisten, könnten auch zwei Klemmkeile 30 an den beiden Seitenwangen 6 und 7 vorgesehen sein, wobei die Zahneingriffe durch entsprechende Auslegung der jeweiligen Paare von Verzahnungen 38 und 39 jeweils um einen halben Zahnabstand versetzt zueinander angeordnet sind.

Der von der Anlagefläche 37 abgehobene Zustand des Klemmkeils 30 bei geöffneter Feststellvorrichtung 4 kann auch als "passive Stellung" des Klemmkeils bezeichnet werden. Der bei geschlossener Feststellvorrichtung an der Anlagefläche 37 anliegende Zustand des Klemmkeils 30 kann als "Bereitschaftsstellung" bezeichnet werden und der im Crash-Fall im Spalt 42 verkeilte Zustand des Klemmkeils 30 Kann als "aktive Stellung" des Klemmkeils 30 bezeichnet werden.

Vorzugsweise ist der Klemmkeil 30 im Crash-Fall weggesteuert, wobei er durch die Verschiebung des Stellteils 3 mitgenommen wird und von seiner Bereitschaftsstellung in seine aktive Stellung gebracht wird.

In den vorstehend beschriebenen Ausführungsvarianten der Erfindung wird die Lenksäule im Crash-Fall vom Klemmkeil gegen jede Verstellung blockiert, also sowohl in Richtung der achsialen Verstellung als auch in Richtung der Höhen- bzw. Neigungsverstellung. Nach dem Verkeilen des Klemmkeils 30 sind das Halteteil 5 und das Stellteil 3 ausreichend fest miteinander fixiert.

Weiters sind auch Ausführungsvarianten denkbar und möglich, bei welchen die Verkeilung eines bei der achsialen Verstellung der Lenksäule mitgenommenen Klemmkeils 30 die Höhen- und/oder Neigungsverstellung nicht oder nicht ausreichend blockieren kann. Eine Blockierung der Höhen- und/oder Neigungsverstellung kann in diesem Fall durch weitere Maßnahmen sichergestellt werden, beispielsweise wie im Folgenden beschrieben.

Bei einer erfindungsgemäßen Lenksäule könnte zusätzlich zur Blockierung der Längsverstellung der Lenksäule durch den Klemmkeil im Crash-Fall oder anstelle von dieser Blockierung der Längsverstellung auch eine Blockierung der Höhenverstellung (bzw. Neigungsverstellung) im Crash-Fall durch einen zusätzlichen oder anders angeordneten Klemmkeil erfolgen. Auch die Höhenverstellung der Lenksäule soll sich im Crash-Fall durch beim Crash auf die Lenksäule einwirkende Kräfte möglichst nicht verstellen. Um beispielsweise eine Verstellung des Stellteils 3 nach oben zu blockieren, könnte ein nach unten offenen Spalt zwischen dem Stellteil 3 und dem Halteteil 5 vorgesehen werden, in welchen der Klemmkeil im Crash-Fall einfährt und verkeilt. Der Klemmkeil ist hierbei wiederum über einen Tragarm mit dem Spannbolzen oder einem mit diesem achsial mitbewegten Teil verbunden und im geschlossenen Zustand der Feststellvorrichtung an das Stellteil 3 angelegt und wird bei der beginnenden Verschiebung des Stellteils 3 im Crash-Fall von diesem mitgenommen wird und in den Spalt eingefahren. In analoger Weise könnte eine Verstellung des Stellteils 3 nach unten im Crash-Fall blockiert werden.

In einem anderen Ausführungsbeispiel der Erfindung könnte die Lenksäule beispielsweise auch ein die Lenkspindel drehbar lagerndes Mantelrohr aufweisen, welches in Längsrichtung der Lenksäule verschiebbar in einer Führungsschiene gelagert ist, die ihrerseits verschwenkbar an einem mit dem Chassis verbundenen Montageteil angebracht ist (wie auch in der eingangs genannten US 6,581,965 B2 beschrieben). Wenn eine Crash-Blockiereinrichtung für die Längsverstellung dieser Lenksäule bereitgestellt werden soll, so wäre das Mantelrohr als das Stellteil und die Führungsschiene als das Halteteil im Sinne der Erfindung anzusehen. Wenn eine Blockiereinrichtung für die Höhenverstellung bereitgestellt werden soll, so wäre die Führungsschiene als das Stellteil und das Montageteil als das Halteteil im Sinne der Erfindung anzusehen.

Eine weitere etwas modifizierte Ausführungsform ist in den Fig. 16 und 17 dargestellt. Hier ist ein in Form eines Nadellagers ausgebildetes Wälzlager direkt an den Tragarm angebaut. Der erste Befestigungsabschnitt 32 des Tragarms 31 bildet hierbei eine der Lagerschalen des Wälzlagers. Das Wälzlager umfasst weiters eine zweite Lagerschale 51. Zwischen dem die erste Lagerschale bildenden Befestigungsabschnitt 32 des Tragarms 31 und der zweiten Lagerschale 51 befinden sich Wälzkörper 52, die in einem Käfig 53 angeordnet sind. Die Baulänge des Spannbolzens 21 kann dadurch minimiert werden.

### Legende zu den Hinweisziffern:

- 1: Lenkspindel
- 2: lenkradseitiges Ende
- 3: Stellteil
- 4: Feststellvorrichtung
- 5: Halteteil
- 6: Seitenwange
- 7: Seitenwange
- 8: Verbindungsschenkel
- 9: Konsole
- 10: Chassis
- 11: Schraube
- 12: Klemmschuh
- 13: Klemmführung
- 14: Biegelasche
- 15: Befestigungsbolzen
- 16: Befestigungsbolzen
- 17: Einkerbung
- 18: Verriegelungsbolzen
- 19: Langloch
- 20: Langloch
- 21: Spannbolzen
- 22: Langloch
- 23: Spannplatte
- 24: Spannhebel
- 25: Längsachse
- 26: Spannnocken
- 27: Gegendruckplatte
- 28: Feststellelement
- 29: Verzahnung
- 30: Klemmkeil
- 31: Tragarm
- 32: erster Befestigungsabschnitt
- 33: Verbindungsabschnitt
- 34: zweiter Befestigungsabschnitt
- 35: Bohrung
- 36: Kontaktfläche
- 37: Anlagefläche
- 38: Verzahnung
- 39: Verzahnung
- 40: Führungsnase
- 41: zweite Keilfläche
- 42: Spalt
- 43: Ausnehmung
- 44: Mutter
- 45: Verzahnung
- 46: Seitenfläche
- 47: Abschnitt
- 48: Abschnitt
- 49: Unterlegscheibe
- 50: Ausstanzung
- 51: Lagerschale
- 52: Wälzkörper
- 53: Käfig

## Patentansprüche

1. Verstellbare Lenksäule für ein Kraftfahrzeug mit einem in mindestens eine Stellrichtung verstellbaren Stellteil (3) zur Einstellung der Position der Lenksäule, einem in diese Stellrichtung unverstellbaren Halteteil (5), einer Feststellvorrichtung (4), in deren geöffnetem Zustand das Stellteil (3) gegenüber dem Halteteil (5) zur Einstellung der Position der Lenksäule verstellbar ist und in deren geschlossenem Zustand das Stellteil (3) von der Feststellvorrichtung (4) festgestellt ist, und einer Crash-Blockiereinrichtung, von der im Crash-Fall eine zusätzliche Haltekraft gegen eine Verschiebung des Stellteils (3) gegenüber dem Halteteil (5) ausübbar ist und die einen im Crash-Fall in einen Spalt (42) zwischen dem Stellteil (3) und dem Halteteil (5) einschiebbaren und in diesem verkeilbaren Klemmkeil (30) aufweist, **dadurch gekennzeichnet, dass** der Klemmkeil (30) mit einem beim Öffnen und Schließen der Feststellvorrichtung (4) sich bewegenden Teil der Feststellvorrichtung (4) in Verbindung steht, sodass beim Schließen der Feststellvorrichtung (4) eine Kontaktfläche (36) des Klemmkeils (30) an eine Anlagefläche (37) des Stellteils (3) anlegbar ist und im geschlossenen Zustand der Feststellvorrichtung (4) mit der Anlagefläche (37) des Stellteils (3) im formschlüssigen und/oder reibschlüssigen Kontakt steht, wobei der Klemmkeil (30) im Crash-Fall bei einer einsetzenden Verschiebung des Stellteils (3) gegenüber dem Halteteil (5) vom Stellteil (3) mitnehmbar und im Spalt (42) zwischen dem Stellteil (3) und dem Halteteil (5) verkeilbar ist, und beim Öffnen der Feststellvorrichtung (4) die Kontaktfläche (36) des Klemmkeils (30) von der Anlagefläche (37) des Stellteils (3) abhebbar ist.

2. Verstellbare Lenksäule nach Anspruch 1, **dadurch gekennzeichnet, dass** der Klemmkeil (30) mit einem beim Öffnen und Schließen der Feststellvorrichtung (4) gegenüber dem Stellteil (3) und/oder Halteteil (5) in eine Verschieberichtung verschiebbaren und im geschlossenen Zustand der Feststellvorrichtung (4) das Stellteil (3) gegenüber dem Halteteil (5) feststellenden Feststellelement (28) der Feststellvorrichtung (4) in die Verschieberichtung des Feststellelements (28) unverschiebbar verbunden ist.

3. Verstellbare Lenksäule nach Anspruch 2, **dadurch gekennzeichnet, dass** die Feststellvorrichtung (4) einen Spannbolzen (21) aufweist, der sich bei Öffnen und Schließen der Feststellvorrichtung in seine achsiale Richtung verschiebt und mit dem sich das Feststellelement (28) beim Öffnen und Schließen der Feststellvorrichtung (4) mitbewegt.

4. Verstellbare Lenksäule nach einem der Ansprüche 1 bis 3, **dadurch gekennzeichnet, dass** der Klemmkeil (30) an einem Tragarm (31) angebracht ist, über welchen der Klemmkeil (30) mit dem beim Öffnen und Schließen der Feststellvorrichtung (4) sich bewegenden Teil der Feststellvorrichtung (4) in Verbindung steht.

5. Verstellbare Lenksäule nach Anspruch 4, **dadurch gekennzeichnet, dass** der Tragarm (31) am Feststellelement (28) oder an einem sich mit diesem beim Öffnen und Schließen der Feststellvorrichtung (4) in die Verschieberichtung mitbewegenden Teil angebracht ist.

6. Verstellbare Lenksäule nach Anspruch 4 oder Anspruch 5, **dadurch gekennzeichnet, dass** der Tragarm (31) einen ersten Befestigungsabschnitt (32), über welchen er am beim Öffnen und Schließen der Feststellvorrichtung (4) sich bewegenden Teil der Feststellvorrichtung (4) befestigt ist, einen zweiten Befestigungsabschnitt (34), an dem der Klemmkeil (30) angebracht ist, und einen Verbindungsabschnitt (33) umfasst.

7. Verstellbare Lenksäule nach Anspruch 6, **dadurch gekennzeichnet, dass** das Feststellelement (28) von einem auf dem Spannbolzen (21) angeordneten Spannbacken gebildet wird und der erste Befestigungsabschnitt (32) des Tragarms (31) an der von der Lenkspindel (1) abgewandten Seite des Spannbackens angeordnet ist und vorzugsweise eine vom Spannbolzen (21) durchsetzte Bohrung (35) aufweist.

8. Verstellbare Lenksäule nach Anspruch 7, **dadurch gekennzeichnet, dass** der erste Befestigungsabschnitt (32) in unverschwenkbarer Verbindung zum Spannbacken (28) steht.

9. Verstellbare Lenksäule nach einem der Ansprüche 1 bis 8, **dadurch gekennzeichnet, dass** an der Kontaktfläche (36) des Klemmkeils (30) eine Verzahnung (38) angeordnet ist, die im an die Anlagefläche (37) des Stellteils (3) angelegten Zustand des Klemmkeils (30) mit einer an der Anlagefläche (37) angeordneten Verzahnung (39) oder mit in der Anlagefläche (37) eingebrachten Ausstanzungen (50) zusammenwirkt.

10. Verstellbare Lenksäule nach einem der Ansprüche 1 bis 9, **dadurch gekennzeichnet, dass** das Stellteil (3) die Lenkspindel (1) drehbar lagert und dass das Halteteil (5) das Stellteil (3) trägt und mit dem Chassis des Kraftfahrzeugs verbunden ist.

11. Verstellbare Lenksäule nach einem der Ansprüche 1 bis 10, **dadurch gekennzeichnet, dass** die Lenksäule in achsialer Richtung verstellbar ist und der Klemmkeil (30) im Crash-Fall eine zusätzliche Haltekraft gegen eine Achsialverstellung der Lenksäule ausübt, wobei er im Crash-Fall vom Stellteil (3) in achsialer Richtung der Lenksäule mitnehmbar ist und der Spalt (42), in dem der Klemmkeil (30) im Crash-Fall verkeilbar ist, zum lenkradseitigen Ende (2) der Lenkspindel (1) hin offen ist.

12. Verstellbare Lenksäule nach einem der Ansprüche 9 bis 11, **dadurch gekennzeichnet, dass** die Lenksäule neigungsverstellbar ist und die Kämme der Verzahnung (38) der Kontaktfläche (36) und der Verzahnung (39) der Anlagefläche (37) kreisbogenförmig verlaufen.

13. Verstellbare Lenksäule nach einem der Ansprüche 1 bis 12, **dadurch gekennzeichnet, dass** die Feststellvorrichtung (4) mindestens ein Feststellelement (28) in form eines eine Verzahnung (45) aufweisenden Spannbackens umfasst, der auf dem Spannbolzen (21) angeordnet ist und der im geschlossenen Zustand der Feststellvorrichtung (4) in eine Verzahnung des Halteteils (5) eingreift.

14. Verstellbare Lenksäule nach einem der Ansprüche 1 bis 13, **dadurch gekennzeichnet, dass** das Stellteil (3) und das Halteteil (5) sich kreuzende Langlöcher (19, 20) aufweisen, die vom Spannbolzen (21) durchsetzt werden, wobei die sich kreuzenden Langlöcher (19, 20) einerseits in Richtung der Längsverstellung, andererseits in Richtung der Neigungs- bzw. Höhenverstellung der Lenksäule ausgerichtet sind.

15. Verstellbare Lenksäule nach einem der Ansprüche 10 bis 14, **dadurch gekennzeichnet, dass** das Halteteil (5) mindestens eine neben dem Stellteil (3) sich erstreckende Seitenwange (6) aufweist und der Spalt (42) zwischen der Seitenwange (6) des Halteteils (5) und dem Stellteil (3) angeordnet ist.

16. Verstellbare Lenksäule nach einem der Ansprüche 10 bis 15, **dadurch gekennzeichnet, dass** die Verbindung des Halteteils (5) mit dem Chassis (10) des Kraftfahrzeugs über eine chassisfeste Konsole (9) hergestellt ist, wobei das Halteteil (5) im Crash-Fall energieverzehrend gegenüber der Konsole (9) in Richtung zur Fahrzeugfront verschiebbar ist.

17. Verstellbare Lenksäule nach Anspruch 16, **dadurch gekennzeichnet, dass** am Halteteil (5) beidseitig Klemmführungen (13) angeordnet sind, in die Führungsschuhe (12) der Konsole (9) klemmend eingreifen.

18. Verstellbare Lenksäule nach Anspruch 16 oder Anspruch 17, **dadurch gekennzeichnet, dass** bei der Verschiebung des Halteteils (5) gegenüber der Konsole (9) eine Verbiegung und vorzugsweise auch ein Aufreißen einer Biegelasche (14) erfolgt.

19. Verstellbare Lenksäule nach einem der Ansprüche 4 bis 18, **dadurch gekennzeichnet, dass** der Tragarm (31) elastisch biegbar ausgebildet ist.

20. Verstellbare Lenksäule nach einem der Ansprüche 1 bis 19, **dadurch gekennzeichnet, dass** die Kontaktfläche (36) des Klemmkeils (30) von einer der beiden Keilflächen des Klemmkeils (30) gebildet wird.

## Claims

1. An adjustable steering column for a motor vehicle with an adjustment part (3) adjustable in at least one adjustment direction for setting the position of the steering column, a holding part (5) which cannot be adjusted in this adjustment direction, a locking device (4), in the opened state of which the adjustment part (3) is adjustable relative to the holding part (5) for setting the position of the steering column and in the closed state of which the adjustment part (3) is locked by the locking device (4), and a crash blocking means, by means of which, in the event of a crash, an additional holding force against displacement of the adjustment part (3) relative to the holding part (5) can be exerted and which has a clamping wedge (30) which, in the event of a crash, can be inserted into a gap (42) between the adjustment part (3) and the holding part (5) and can be wedged therein, **characterised in that** the clamping wedge (30) is connected to a part of the locking device (4) which moves upon opening and closing the locking device (4), so that upon closing the locking device (4) a contact surface (36) of the clamping wedge (30) can be placed against a locating face (37) of the adjustment part (3) and in the closed state of the locking device (4) is in positive-locking and/or frictional contact with the locating face (37) of the adjustment part (3), the clamping wedge (30), in the event of a crash, upon the start of displacement of the adjustment part (3) relative to the holding part (5) being able to be entrained by the adjustment part (3) and being able to be wedged in the gap (42) between the adjustment part (3) and the holding part (5), and upon opening the locking device (4) the contact surface (36) of the clamping wedge (30) being able to be lifted away from the locating face (37) of the adjustment part (3).

2. An adjustable steering column according to Claim 1, **characterised in that** the clamping wedge (30) is connected non-displaceably, in the direction of displacement of the locking element (28), to a locking element (28) of the locking device (4) which upon opening and closing the locking device (4) is displaceable in a direction of displacement relative to the adjustment part (3) and/or holding part (5) and in the closed state of the locking device (4) locks the adjustment part (3) relative to the holding part (5).

3. An adjustable steering column according to Claim 2, **characterised in that** the locking device (4) has a tightening bolt (21) which upon opening and closing the locking device is displaced in its axial direction and with which the locking element (28) moves jointly upon opening and closing the locking device (4).

4. An adjustable steering column according to one of Claims 1 to 3, **characterised in that** the clamping wedge (30) is attached to a supporting arm (31), via which the clamping wedge (30) is connected to the part of the locking device (4) which moves upon opening and closing the locking device (4).

5. An adjustable steering column according to Claim 4, **characterised in that** the supporting arm (31) is attached to the locking element (28) or to a part which moves jointly therewith upon opening and closing the locking device (4) in the direction of displacement.

6. An adjustable steering column according to Claim 4 or Claim 5, **characterised in that** the supporting arm (31) comprises a first fastening section (32) via which it is fastened to the part of the locking device (4) which moves upon opening and closing the locking device (4), a second fastening section (34), to which the clamping wedge (30) is attached, and a connecting section (33).

7. An adjustable steering column according to Claim 6, **characterised in that** the locking element (28) is formed by a tightening jaw located on the tightening bolt (21) and the first fastening section (32) of the supporting arm (31) is located on the side of the tightening jaw remote from the steering shaft (1) and preferably has a bore (35) through which the tightening bolt (21) passes.

8. An adjustable steering column according to Claim 7, **characterised in that** the first fastening section (32) is connected non-pivotably to the tightening jaw (28).

9. An adjustable steering column according to one of Claims 1 to 8, **characterised in that** teeth (38) are located on the contact surface (36) of the clamping wedge (30), which in the state of the clamping wedge (30) applied against the locating face (37) of the adjustment part (3) cooperates with teeth (39) located on the locating face (37) or with cutouts (50) jointly formed in the locating face (37).

10. An adjustable steering column according to one of Claims 1 to 9, **characterised in that** the adjustment part (3) rotationally bears the steering shaft (1) and that the holding part (5) bears the adjustment part (3) and is connected to the chassis of the motor vehicle.

11. An adjustable steering column according to one of Claims 1 to 10, **characterised in that** the steering column is adjustable in the axial direction and the clamping wedge (30), in the event of a crash, exerts an additional holding force against axial displacement of the steering column, it, in the event of a crash, being able to be entrained by the adjustment part (3) in the axial direction of the steering column and the gap (42) in which the clamping wedge (30) can be wedged in the event of a crash is open towards the steering-wheel-side end (2) of the steering shaft (1).

12. An adjustable steering column according to one of Claims 9 to 11, **characterised in that** the steering column is of adjustable inclination and the sets of teeth (38) of the contact surface (36) and of the teeth (39) of the locating face (37) extend in arcuate manner.

13. An adjustable steering column according to one of Claims 1 to 12, **characterised in that** the locking device (4) comprises at least one locking element (28) in the form of a tightening jaw having teeth (45), which jaw is located on the tightening bolt (21) and which in the closed state of the locking device (4) engages in teeth of the holding part (5).

14. An adjustable steering column according to one of Claims 1 to 13, **characterised in that** the adjustment part (3) and the holding part (5) have crossing elongate holes (19, 20), through which the tightening bolt (21) passes, the crossing elongate holes (19, 20) being oriented on one hand in the direction of the longitudinal adjustment, and on the other hand in the direction of the adjustment of inclination or height of the steering column.

15. An adjustable steering column according to one of Claims 10 to 14, **characterised in that** the holding part (5) has at least one side cheek (6) extending next to the adjustment part (3) and the gap (42) is located between the side cheek (6) of the holding part (5) and the adjustment part (3).

16. An adjustable steering column according to one of Claims 10 to 15, **characterised in that** the connection of the holding part (5) to the chassis (10) of the motor vehicle is effected via a bracket (9) fixed to the chassis, the holding part (5) in the event of a crash being displaceable in energy-dissipating manner relative to the bracket (9) in the direction of the front of the vehicle.

17. An adjustable steering column according to Claim 16, **characterised in that** clamping guides (13) are arranged on both sides on the holding part (5), into which guides guide shoes (12) of the bracket (9) engage in clamping manner.

18. An adjustable steering column according to Claim 16 or Claim 17, **characterised in that** upon displacement of the holding part (5) relative to the bracket (9) bending and preferably also tearing of a bending tab (14) takes place.

19. An adjustable steering column according to one of Claims 4 to 18, **characterised in that** the supporting arm (31) is made to be elastically bendable.

20. An adjustable steering column according to one of Claims 1 to 19, **characterised in that** the contact surface (36) of the clamping wedge (30) is formed by one of the two wedge surfaces of the clamping wedge (30).

## Revendications

1. Colonne de direction réglable pour véhicule automobile comportant une partie réglable (3), dans la direction de réglage pour régler la position de la colonne de direction,
une partie de fixation (5) non réglable dans la direction de réglage, un dispositif de blocage (4), qui, en position ouverte de la partie de réglage (3), par rapport à la partie de fixation (5), permet le réglage de la position de la colonne de direction et qui, en position fermée de la partie de réglage (3), est bloquée par le dispositif de blocage (4) et une installation de blocage de collision, qui en cas de collision, exerce une force de fixation supplémentaire contre le coulissement de la partie réglable (3) par rapport à la partie de fixation (5) et qui, en cas de collision, se glisse dans un intervalle (42) entre la partie réglable (3) et la partie de fixation (5) et comporte un coin de blocage (30) se bloquant dans cet intervalle,
**caractérisée en ce que**
le coin de blocage (30) est en liaison avec la partie du dispositif de blocage (4) qui se déplace lors de l'ouverture et de la fermeture du dispositif de blocage (4) de façon qu'à la fermeture du dispositif de blocage (4), une surface de contact (36) du coin de blocage (30) s'applique contre une surface d'appui (37) de la partie réglable (3) et qu'à l'état fermé, le dispositif de blocage (4) est en contact par une liaison de forme et/ou de friction avec la surface d'appui (37) de la partie réglable (3), et
en cas de collision, lorsque se produit un coulissement de la partie réglable (3) par rapport à la partie de fixation (5), le coin de blocage (30) est entraîné par la partie réglable (3) et se coince dans l'intervalle (42) entre la partie réglable (3) et la partie de fixation (5) et
à l'ouverture du dispositif de blocage (4), la surface de contact (36) du coin de blocage (30) se dégage de la surface d'appui (37) de la partie réglable (3).

2. Colonne de direction réglable selon la revendication 1,
**caractérisée en ce qu'**
à l'ouverture et à la fermeture du dispositif de blocage (4) par rapport à la partir réglable (3) et/ou de la partie de fixation (5), le coin de blocage (30) coulisse dans une direction de coulissement et à l'état fermé du dispositif de blocage (4), la partie réglable (3) est reliée de manière non coulissante par rapport à l'élément de blocage (28) du dispositif de blocage (4) qui se bloque par rapport à la partie de fixation (5) en étant reliée de manière bloquée en coulissement dans la direction de coulissement de l'élément de blocage (28).

3. Colonne de direction réglable selon la revendication 2,
**caractérisée en ce que**
le dispositif de blocage (4) comporte un goujon de serrage (21) qui, à l'ouverture et à la fermeture du dispositif de blocage, se déplace dans sa direction axiale et participe au mouvement de l'élément de blocage (28) lors de l'ouverture et de la fermeture du dispositif de blocage (4).

4. Colonne de direction réglable selon l'une des revendications 1 à 3,
**caractérisée en ce que**
le coin de blocage (30) est installé sur un bras de support (31) par lequel à l'ouverture et à la fermeture du dispositif de blocage (4), le coin de blocage (30), coopère avec la partie mobile du dispositif de blocage (4).

5. Colonne de direction réglable selon la revendication 4,
**caractérisée en ce que**
le bras de support (31) est monté sur un élément de blocage (28) ou une partie qui se déplace dans la direction de coulissement avec le dispositif de blocage (4) lors de son ouverture et de sa fermeture.

6. Colonne de direction réglable selon la revendication 4 ou la revendication 5,
**caractérisée en ce que**
le bras de support (31) comporte un premier segment de fixation (32) par lequel il est fixé à la partie du dispositif de blocage (4) qui se déplace lors de l'ouverture et de la fermeture du dispositif de blocage (4), un second segment de fixation (34) portant le coin de blocage (30) et un segment de liaison (33).

7. Colonne de direction réglable selon la revendication 6,
**caractérisée en ce que**
l'élément de blocage (28) est formé par un mors installé sur un goujon de serrage (21) et le premier segment de fixation (32) du bras de support (31) est installé sur le côté du mors de serrage non tourné vers la broche de direction (1) et il comporte de préférence un perçage (35) traversé par le goujon de serrage (21).

8. Colonne de direction réglable selon la revendication 7,
**caractérisée en ce que**
le premier segment de fixation (32) est relié d'une manière non basculante au mors (28).

9. Colonne de direction réglable selon l'une des revendications 1 à 8,
**caractérisée en ce que**
la première surface de contact (36) du coin de serrage (30) comporte une denture (38) qui, lorsque le coin de blocage (30) est appliqué contre la surface d'appui (37) de la partie réglable (3), coopère par une denture (39) prévue sur la surface d'appui (37) ou avec une denture emboutie (50) réalisée dans la surface d'appui (37).

10. Colonne de direction réglable selon l'une des revendications 1 à 9,
**caractérisée en ce que**
la partie réglable (3) reçoit à rotation la broche de direction (1) et la partie de fixation (5) porte la partie réglable (3) en étant reliée par celle-ci au châssis du véhicule.

11. Colonne de direction réglable selon l'une des revendications 1 à 10,
**caractérisée en ce que**
la colonne de direction est réglable dans la direction axiale et le coin de blocage (30) exerce en cas de collision, une force de fixation supplémentaire vis-à-vis du coulissement axial de la colonne de direction et en cas de collision il peut être entraîné dans la direction axiale de la colonne de direction et l'intervalle (42) dans lequel se coince le coin de blocage (30) en cas de collision, est ouvert en direction de l'extrémité côté volant (2) de la broche de direction (1).

12. Colonne de direction réglable selon l'une des revendications 9 à 11,
**caractérisée en ce que**
la colonne de direction est réglable en inclinaison et les griffes de la denture (38) de la surface de contact (36) et de la denture (39) de la surface d'appui (37) ont une forme d'arc de cercle.

13. Colonne de direction réglable selon l'une des revendications 1 à 12,
**caractérisée en ce que**
le dispositif de blocage (4) comporte au moins un élément de blocage (28) sous la forme d'un mors muni d'une denture (45), ce more étant installé sur le goujon de serrage (21) et en position serrée du dispositif de blocage (4) il prend dans une denture de la pièce de fixation (5).

14. Colonne de direction réglable selon l'une des revendications 1 à 13,
**caractérisée en ce que**
la partie réglable (3) et la partie de fixation (5) ont des trous oblongs croisés (19, 20) traversés par le goujon de serrage (21),
les trous oblongs croisés (19, 20) s'étendent d'une part dans la direction du réglage longitudinal et d'autre part dans la direction de l'inclinaison du réglage en hauteur de la colonne de direction.

15. Colonne de direction réglable selon l'une des revendications 10 à 14,
**caractérisée en ce que**
la partie de fixation (5) comporte une joue latérale (6) qui s'étend au moins à côté de la partie réglable (3) et l'intervalle (42) se trouve entre la joue latérale (6) de la partie de fixation (5) et de la partie réglable (3).

16. Colonne de direction réglable selon l'une des revendications 10 à 15,
**caractérisée en ce que**
la liaison entre la partie de fixation (5) et le châssis (10) du véhicule automobile se fait par une console (9) solidaire du châssis, la partie de fixation (5) absorbant de l'énergie en cas de collision par rapport à la console (9) en coulissant vers l'avant du véhicule.

17. Colonne de direction réglable selon la revendication 16,
**caractérisée en ce que**
la partie de fixation (5) comporte des deux côté des guides de serrage (13) qui pénètrent par pincement dans les patins de guidage (12) de la console (9).

18. Colonne de direction réglable selon la revendication 16 ou la revendication 17,
**caractérisée en ce que**
lors du coulissement de la partie de fixation (5) par rapport à la console (9), il y a un coulissement et de préférence également un arrachage d'une patte de scellement (14).

19. Colonne de direction réglable selon l'une des revendications 4 à 18,
**caractérisée en ce que**
le bras de support (31) est souple élastiquement.

20. Colonne de direction réglable selon l'une des revendications 1 à 19,
**caractérisée en ce que**
la surface de contact (36) du coin de blocage (30) est formée par l'une des deux surfaces du coin de blocage (30).
